# EUROPÄISCHE PATENTSCHRIFT

(11) **EP 0 503 247 B1**
(45) Veröffentlichungstag und Bekanntmachung des Hinweises auf die Patenterteilung: **19.10.1994**
(21) Anmeldenummer: 92101151.6
(22) Anmeldetag: 24.01.1992
(51) Int. Cl.: B23B 51/00

(54) **Bohrer zur Herstellung von Bohrlöchern mit Hinterschneidung**
Drill for making holes with an undercutting
Foret pour usiner des trous avec chanfreinage

(30) Priorität: 13.03.1991 DE 9103015 U
(43) Veröffentlichungstag der Anmeldung: 16.09.1992
(73) Patentinhaber: fischerwerke Artur Fischer GmbH & Co. KG, D-72178 Waldachtal (DE)
(72) Erfinder: Mayer, Burkhard Dr. Ing., W-7033 Herrenberg (DE); Hoppe, Hartmut, W-7240 Horb a. N. (DE)

(56) Entgegenhaltungen:
- EP-A- 0 454 950
- DE-A- 3 227 767
- DE-A- 3 828 171
- DE-A- 3 840 066
- DE-A- 3 840 082

## Beschreibung

Die Erfindung betrifft einen Bohrer zur Herstellung von Bohrlöchern mit Hinterschneidung gemäß dem Oberbegriff des Anspruches 1.

Aus der DE 3 840 066 A1 ist ein Bohrer zur Herstellung von Bohrlöchern mit einer am Bohrlochgrund befindlichen Hinterschneidung bekannt, dessen Bohrkopf seitlich am Schaft überstehende Seitenschneiden besitzt. Derartige Bohrer lassen sich in Schlagbohrmaschinen einspannen und werden zur Herstellung des Bohrloches und der Hinterschneidung verwendet. Ein Tiefenanschlag, der am Bohrschaft absteht, begrenzt die Eindringtiefe des Bohrers. Als Tiefenanschlag kann ein am Schaft angeformter Bund dienen, über den zur Schonung der Wandoberfläche ein aus Kunststoff bestehendes elastisches, ringförmiges Dämpfungselement übergestülpt ist. Als Schwenklager zum Ausreiben der Hinterschneidung dient eine Verdickung des Bohrschaftes zwischen Bohrkopf und Tiefenanschlag, die an der Bohrlochwandung anliegt. Das Schwenken des Bohrers im Bohrloch wird dadurch erreicht, daß der Bohrschaft von der Verdickung ausgehend sich in Richtung Bohrkopf und Tiefenanschlag gleichmäßig verjüngt.

Beim Bohren nach unten und längeren Bohrlöchern in der Wand kann sich das von den Bohrmehlnuten geförderte Bohrmehl hinter der Verdickung zwischen dem sich zum Tiefenanschlag hin verjüngenden Bohrschaft und der Bohrlochwandung so stark festsetzen, daß der Bohrer sich im Bohrloch nicht oder nur sehr schwer lösbar verklemmt. Damit ist weder ein Liften des Bohrers zum Ausräumen des Bohrmehls noch ein Ausschwenken des Bohrers zur Herstellung der Hinterschneidung möglich.

Aufgrund dieser Probleme, insbesondere bei der Herstellung von größeren Bohrlöchern, wird daher mit einem herkömmlichen Bohrer zunächst das zylindrische Bohrloch erstellt. Da dieser Bohrer keine Verdickung aufweist, tritt keine Stauchung des Bohrmehls und damit eine Verklemmung des Bohrers im Bohrloch ein. Nach der Erstellung des zylindrischen Bohrloches erfolgt mit einem Ausreibgerät, das sowohl einen Tiefenanschlag als auch eine Verdickung zur Bildung des Schwenklagers in Verbindung mit der Bohrlochwandung aufweist, die Ausreibung der Hinterschneidung in der Bohrlochtiefe. Ein solches, weder mit Bohrmehlnuten noch mit einer Bohrspitze ausgestattetes Ausreibgerät ist aus der DE 3 840 082 A1 bekannt. Bei der Herstellung der Hinterschneidung mit diesem bekannten Ausreibgerät kann zwar keine Verklemmung eintreten, allerdings ist durch das zweistufige Herstellverfahren des Bohrloches ein erheblich höherer Zeitaufwand erforderlich.

Der Erfindung liegt die Aufgabe zugrunde, einen Bohrer zur einstufigen Herstellung von Bohrlöchern mit Hinterschneidung derart zu verbessern, daß eine Verklemmung im Bohrloch durch Bohrmehl nicht mehr eintritt.

Die Lösung dieser Aufgabe wird durch die im Anspruch 1 angegebenen Merkmale erreicht. Mit der unmittelbar im Anschluß an das Größtmaß der Verdickung angeordneten und einen scharfkantigen Übergang bildenden Abstufung wird zwischen dem Bohrschaft und der Bohrlochwandung ausreichend Raum geschaffen, um das von den Bohrmehlnuten nicht herausgeförderte Bohrmehl aufzunehmen. Ferner sind durch die zylindrische Form der Abstufung Keilflächen vermieden, die eine bis zur Verklemmung des Bohrers führende Verdichtung des Bohrmehls bewirken. Der scharfkantige Übergang der Abstufung bildet außerdem eine Schabkante, die beim Liften und Herausziehen des Bohrers das Bohrmehl von der Bohrlochwandung in die Bohrmehlnuten abschabt.

Bei sehr langen Bohrern ist es zweckmäßig, etwa in der Mitte des ersten abgestuften Abschnittes eine weitere Abstufung vorzusehen, die sich unmittelbar vor dem Tiefenanschlag wieder auf den Durchmesser des ersten abgestuften Abschnittes erweitert. Mit dieser Maßnahme wird eine zweite Schabkante und weiterer Raum für die Aufnahme von Bohrmehl geschaffen.

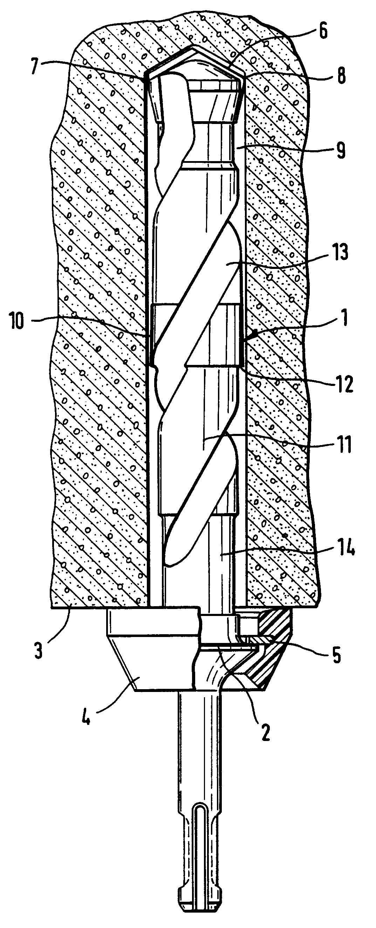

Die Erfindung wird nachfolgend anhand der Zeichnung näher erläutert.

Der Bohrer 1 hat einen am Bohrschaft angeformten bundförmigen Tiefenanschlag 2, über den zur Dämpfung beim Auftreffen auf die Wandoberfläche 3 eine Kunststoffkappe 4 als Dämpfungselement übergestülpt ist. Zur Abstützung der Kunststoffkappe 4 am Tiefenanschlag 2 ist eine Metallscheibe 5 vorgesehen, die in der Kunststoffkappe 4 eingebettet ist.

Der Bohrer 1 besitzt einen Bohrkopf 6 mit seitlich am Bohrschaft überstehenden Seitenschneiden 7,8, die in ansich bekannter Weise zur Herstellung einer Hinterschneidung am Bohrlochgrund eines Bohrlochs 9 dienen. Der Bohrschaft besitzt eine Verdickung 10, die innerhalb des Bohrlochs 9 beim Ausreiben der Hinterschneidung den Schwenkpunkt definiert. Der Bohrer 1 liegt dabei mit der breitesten Stelle der Verdickung 10 an der Bohrlochwandung an und läßt sich um diesen Schwenkpunkt seitlich verschwenken.

Unmittelbar im Anschluß an die Verdickung 10 weist der Bohrschaft in Richtung Tiefenanschlag 2 eine Abstufung 11 in Form eines zylindrischen Abschnittes mit reduziertem Durchmesser auf. Durch den scharfkantigen Übergang der Abstufung ergibt sich eine Schabkante 12, die beim Liften und Herausziehen des Bohrers 1 aus dem Bohrloch 9 Bohrmehl von der Bohrlochwandung abschabt. Dieses und das beim Bohren entstehende Bohrmehl wird über die Bohrmehlnuten 13 aus dem Bohrloch gefördert.

Etwa in der Mitte des ersten abgestuften Abschnittes ist eine weitere Abstufung 14 vorgesehen, die sich unmittelbar vor dem Tiefenanschlag 2 wieder auf den Durchmesser des ersten abgestuften Abschnittes 11 erweitert. Die Durchmesser der beiden Abstufungen 11 und 14 sind soweit reduziert, daß das zur Herstellung einer Hinterschneidung notwendige Ausschwenken des Bohrers möglich ist.

## Patentansprüche

1. Bohrer zur Herstellung von Bohrlöchern mit Hinterschneidung in einem Mauerwerk, der einen Bohrkopf mit seitlich am Schaft überstehenden Seitenschneiden aufweist, und der am Bohrschaft im Abstand zum Bohrkopf mit einer als Schwenklager dienenden und an der Bohrlochwandung anliegenden Verdickung und etwa im gleichen Abstand zur Verdickung mit einem bundförmigen Tiefenanschlag versehen ist, **dadurch gekennzeichnet**, daß der Bohrschaft unmittelbar im Anschluß an das Größtmaß der Verdickung (10) in Richtung Tiefenanschlag (2) wenigstens eine einen scharfkantigen Übergang (12) bildende Abstufung (11) in Form eines zylindrischen Abschnittes mit reduziertem Durchmesser aufweist.

2. Bohrer nach Anspruch 1, **dadurch gekennzeichnet**, daß sich etwa in der Mitte des ersten abgestuften Abschnittes (11) eine weitere Abstufung (14) anschließt, die sich unmittelbar vor dem Tiefenanschlag (2) wieder auf den Durchmesser des ersten abgestuften Abschnittes (11) erweitert.

## Claims

1. Drill bit for producing drilled holes with an undercut in masonry, which has a drilling head with lateral cutting edges projecting laterally from the shank and which on the drill shank, at a distance from the drilling head, is provided with an enlargement serving as a swivel bearing and at approximately the same distance from the enlargement is provided with a collar-like depth stop, characterized in that immediately adjoining the maximum dimension of the enlargement (10), towards the depth stop (2), the drill shank has at least one step (11) forming a sharp-edged transition (12), the step being in the form of a cylindrical portion of reduced diameter.

2. A drill bit according to claim 1, characterized in that a further step (14) adjoins the first stepped portion (11) approximately in the middle thereof, the further stepped portion widening again directly in front of the depth stop (2) to the diameter of the first stepped portion (11).

## Revendications

1. Foret pour percer des trous pourvus d'un élargissement intérieur dans une maçonnerie, comprenant une tête de foret avec des tranchants latéraux faisant latéralement saillie de la tige et qui est pourvu, sur sa tige de foret, à distance de la tête, d'un épaississement servant de palier de pivotement et s'appliquant contre la paroi du trou percé, ainsi que, à peu près à la même distance par rapport à l'épaississement, d'une butée de profondeur ayant la forme d'un collet, **caractérisé en ce que** la tige du foret présente, immédiatement à la suite de la dimension maximale de l'épaississement (10), dans la direction de la butée de profondeur (2), au moins une réduction (11), formant une transition à arête vive (12), sous la forme d'un segment cylindrique de diamètre réduit.

2. Foret selon la revendication 1, **caractérisé en ce que** le premier segment réduit (11) se raccorde, à peu près en son milieu, à une réduction supplémentaire (14) qui s'élargit de nouveau, immédiatement avant la butée de profondeur (2), au diamètre du premier segment réduit (11).
